Europäisches Patentamt

European Patent Office

Office européen des brevets

(19)

(11) Veröffentlichungsnummer : **0 192 636 B1**

# (12) EUROPÄISCHE PATENTSCHRIFT

(45) Veröffentlichungstag der Patentschrift :
03.04.91 Patentblatt 91/14

(51) Int. Cl.⁵ : **C03B 3/00, C03B 1/00**

(21) Anmeldenummer : 86890035.8

(22) Anmeldetag : 19.02.86

(54) Vorrichtung zur thermischen Behandlung von Rohstoffgemenge für die Glaserzeugung.

(30) Priorität : 22.02.85 AT 539/85

(43) Veröffentlichungstag der Anmeldung :
27.08.86 Patentblatt 86/35

(45) Bekanntmachung des Hinweises auf die
Patenterteilung :
03.04.91 Patentblatt 91/14

(84) Benannte Vertragsstaaten :
AT BE CH DE FR GB IT LI NL SE

(56) Entgegenhaltungen :
FR-A- 1 477 690
US-A- 1 889 509
US-A- 3 545 988
US-A- 3 912 534

(73) Patentinhaber : Sedlmeyr, Luise
Am Anger 14
W-8491 Chamerau (DE)
Patentinhaber : Sedlmeyr, Werner
Am Anger 14
W-8491 Chamerau (DE)

(72) Erfinder : Harcuba, Siegfried
Höhenstrasse 96
A-6020 Innsbruck (AT)

(74) Vertreter : Wasmeier, Alfons, Dipl.-Ing.
Wasmeier & Graf Postfach 382 Greflinger
Strasse 7
W-8400 Regensburg 1 (DE)

## Beschreibung

Die Erfindung betrifft eine Vorrichtung zur thermischen Behandlung von Rohstoffgemenge für die Glaserzeugung vor dessen Einbringung in die Glasschmelze, bei welcher das Rohstoffgemenge in eine rotierbare Trommel eingebracht und unter Rotation derselben durch diese Trommel hindurchgefördert sowie in dieser erhitzt wird, worauf es an die Glasschmelze abgegeben wird, wobei die rotierbare Trommel, welche aus gut wärmeleitendem Material gefertigt ist, in axialer Richtung von einem Rohr durchsetzt ist und an ihrer Außenseite von einem ringförmigen Kanal umgeben ist, sowie sowohl das Rohr als auch der ringförmige Kanal von aus der Schmelzwanne stammenden heißen Gasen durchströmt sind, welche den ringförmigen Kanal im Gegenstrom zu dem in der Trommel geförderten Glasmenge durchströmen.

Es ist bekannt, Rohstoffgemenge für die Glaserzeugung vor seiner Einbringung in die Glasschmelze zu erwärmen. Der Zweck dieser Erwärmung besteht darin, die in diesem befindlichen staubförmigen Anteile zu binden, um zu verhindern, daß diese bei der Einbringung in das Schmelzaggregat von den Verbrennungsgasen bzw. von den Rauchgasen abgeführt werden, wodurch die Agressivität dieser Gase erhöht wird, weiters die Zusammensetzung des Gemenges geändert wird und zudem die Regeneratoren und Rekuperatoren verstaubt werden, wodurch sie in ihrer Wirksamkeit stark beeinträchtigt werden.

Aus der DE-A-17 71 990 ist eine rotierbare Trommel bekannt, durch welche das Rohstoffgemenge vor seiner Einbringung in die Glasschmelze hindurchgesetzt und in dieser erwärmt wird. Da dabei die Erwärmung durch einen zusätzlichen Brenner erfolgt, bedingt dies einen hohen Energieaufwand. Zudem besteht dabei die Gefahr, daß durch die Rauchgase staubförmige Anteile abgeführt wodurch die Zusammensetzung des Gemenges verändert wird. Weiters können hierdurch Feststoffreaktionen bedingt werden.

Aus der DE-C-865 644 ist weiters eine rotierbare Trommel bekannt, in welcher das Rohstoffgemenge vor seiner Einbringung in die Glasschmelze durch einen elektrischen Heizstab erwärmt wird. Wenngleich hierdurch ein Teil der vorstehend angeführten Nachteile vermieden wird, verbleibt das Erfordernis, eine gesonderte Wärmequelle, durch welche ein zusätzlicher Energieaufwand bedingt wird, vorzusehen.

Aus der DE-C-457 087 ist weiters ein Schmelzofen bekannt, der als Drehtrommel ausgebildet ist, wobei in einem ersten Stadium des Schmelzvorganges die Brenngase, durch welche eine Schädigung des Rohstoffgemenges bedingt werden kann, durch ein im Inneren der Trommel angeordnetes Rohr hindurch abgeführt werden. Dabei handelt es sich jedoch nicht um eine Vorrichtung zur thermischen Behandlung des Rohstoffgemenges vor seiner Einbringung in die Glasschmelze, sondern vielmehr um eine Schmelzvorrichtung, welcher kein Gemenge zugeführt wird, das vorher thermisch behandelt wurde.

Aus der US-A-3 545 988 ist weiters eine Vorrichtung der eingangs Art zur Erwärmung von Rohstoffgemenge für die Glaserzeugung bekannt, welche Vorrichtung durch eine rotierbare Trommel gebildet ist, welche in axialer Richtung von einem Rohr durchsetzt ist und welche von einem Gehäuse umgeben ist, wobei sich zwischen der Trommel und dem Gehäuse ein ringförmiger Kanal befindet. Durch die Trommel werden einige Rohstoffkomponenten für die Glaserzeugung hindurchgesetzt, welche durch das Rohr bzw. durch den ringförmigen Kanal hindurch geführte, aus der Schmelzwanne kommende Abgase erwärmt werden.

Diese bekannte Vorrichtung ist jedoch deshalb nachteilig, da sämtliche ihrer Bestandteile eine verdrehbare Einheit bilden weswegen sehr große Lager erforderlich sind bzw. ein Ausbau und Austausch von beschädigten Teilen nur mit besonderem Aufwand möglich ist. Zudem erfolgt durch diese Vorrichtung nur eine geringe Erwärmung eines Teiles der für die Glaserzeugung erforderlichen Rohstoffkomponenten, wodurch keine Silikatbildung bewirkt wird.

Der Erfindung liegt demnach die Aufgabe zugrunde, eine Vorrichtung der eingangs gennanten Art zur thermischen Behandlung des Rohstoffgemenges vor dessen Einbringung in die Glasschmelze zu schaffen, durch welche die dem Stand der Technik anhaftenden Nachteile vermieden werden. Dies wird erfindungsgemäß dadurch erzielt, daß sich die rotierbare Trommel, welche gegenüber der freien Atmosphäre weitgehend abgeschlossen ist, innerhalb eines gestellfesten Isoliergehäuses befindet und auch das die Trommel durchsetzende Rohr gestellfest ist, daß weiters die rotierbare Trommel an ihrer Außenfläche mit der Vergrößerung der Wärmeaufnahmefläche dienenden Profilierungen, insbesondere mit Rippen, ausgebildet ist, und daß auch das Rohr mit im Gegenstrom zu dem in der Trommel geförderten Glasgemenge durchströmt ist, wobei die Anordnung so gewählt ist, daß im Rohstoffgemenge eine teilweise Silikatbildung erfolgt.

Durch die Rotation der Trommel wird aufgrund von in dieser angeordneten Leiteinrichtungen das Rohstoffgemenge in axialer Richtung gefördert, wobei infolge der Bewegung desselben in diesem eingeschlossene Luft austritt und infolge der während des Durchsatzes durch die Trommel hindurch ansteigenden Temperatur desselben die einzelnen Bestandteile des Gemenges zunehmend reagieren, wodurch im Gemenge, bis dieses von der Trommel abgegeben wird, ein Teil der Silikatbildung erfolgt ist. Da die Trommel im wesentlichen abgeschlossen ist und durch diese keine Gase hindurchgeführt werden, können keine staubförmigen Anteile des Rohstoffgemenges aus der Trommel austreten bzw. durch Gasströmungen abgeführt werden. Da das Rohstoffgemenge durch die im Glasschmelzverfahren anfallenden Gase erwärmt wird, ist keine gesonderte Energiequelle erforderlich, sondern können die aus dem Schmelzverfahren zur Verfügung stehenden heißen Gase herangezogen werden, ohne daß durch diese Nachteile bedingt werden.

Auf welche Temperatur das Rohstoffgeimenge aufgeheizt wird, hängt dabei von der besonderen Komposition desselben ab. Vorzugsweise wird durch die Erwärmung des Rohstoffgemenges in der Trommel angenähert die Hälfte der Silikatbildung bewirkt.

Vorzugsweise ist auch die Innenfläche des die Trommel durchsetzenden Rohres mit der Vergrößerung der Wärmeaufnahr meflächen dienenden Profilierungen, insbesondere mit Rippen, ausgebildet. Zudem können an der Innenwand des die Trommel umgebenden Gehäuses Profilierungen vorgesehen sein, durch welche in dem zwischen der Trommel und dem Gehäuse gebildeten Strömungskanal Wirbelströmungen bewirkt werden. Die rotierbare Trommel selbst kann mit gestellfesten, gegenüber derselben abgedichteten Stirnwänden ausgebildet sein, wobei eine erste Stirnwand von einer Fördereinrichtung zur Beschickung des Innenraumes der Trommel mit Rohstoffgemenge durchsetzt ist und im Bereich der zweiten Stirnwand eine zur Glasschmelzwanne abgehende Rutsche vorgesehen ist.

Der Gegenstand der Erfindung ist nachstehend anhand eines in der Zeichnung dargestellten Ausführungsbeispiels näher erläutert.

Es zeigen :

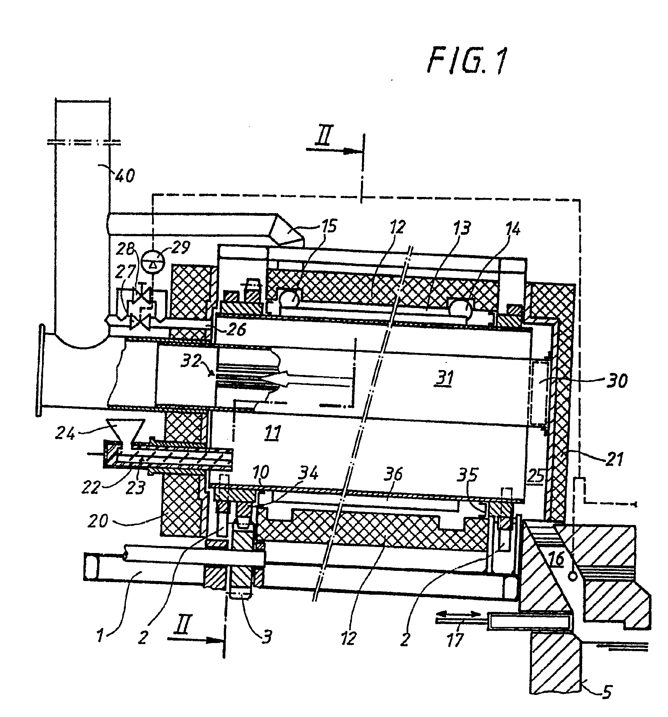

Fig. 1 eine anmeldungsgemäße Vorrichtung in axialem Längsschnitt und

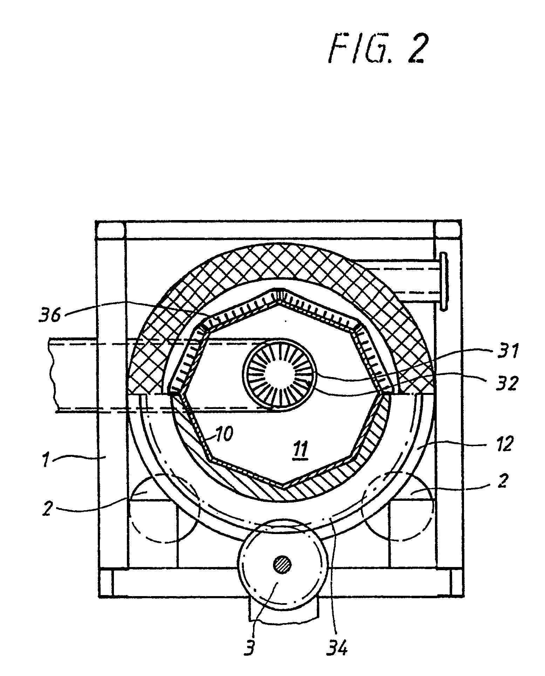

Fig. 2 einen Schnitt nach der Linie II-II der Fig. 1.

Eine erfindungsgemäße Vorrichtung weist ein Traggestell 1 auf, von dem Laufrollen 2 und ein Antriebszahnrad 3 zur rotierbaren Lagerung einer Trommel 10 gehaltert sind. Auf den Laufrädern 2 ist ein am Außenmantel der Trommel 10 vorgesehener Laufkranz 35 gelagert. Mit dem Zahnrad 3 kämmt ein gleichfalls am Außenmantel der Trommel 10 angeordneter Zahnkranz 34.

An ihren Stirnflächen ist die Trommel 10 durch eine erste gestellfeste Stirnplatte 20 und durch eine zweite gestellfeste Stirnplatte 21 abgeschlossen. Die erste Stirnplatte 20 ist von einem Rohr 22 durchsetzt, in dem sich eine Förderschnecke 23 befindet. Weiters ist die erste Stirnplatte 20 von einem Gasabzugsrohr 26 durchsetzt, das in den Innenraum 11 der Trommel 10 führt und über Ventile 27, 28 zu einem Abzugsrohr 40 führt. Die zweite Stirnplatte 21 befindet sich von der zugeordneten Stirnkante der Trommel 10 etwas im Abstand, wodurch ein Spaltraum 25 gebildet ist, an welchen eine Rutsche 16 anschließt, welche zu einer Glasschmelzwanne 5 führt. Die Rutsche 16 ist durch einen Schieber 17 absperrbar. In der Seitenwandung der zweiten Stirnplatte 21 ist ein seitlicher Rohranschluß 30 vorgesehen, der zu einem die Trommel 10 axial durchsetzenden Rohr 31 führt, welches Rohr 31 an einem Ende von der zweiten Stirnplatte 21 gehalten ist und das die erste Stirnplatte 20 durchsetzt und in das Abzugsrohr 40 mündet.

Der Außenmantel der Trommel 10 ist von einem im Abstand angeordneten, gleichfalls gestellfesten Isoliergehäuse 12 umgeben, wobei zwischen dem Gehäuse 12 und der äußeren Wandung der Trommel 10 ein Ringkanal 13 gebildet ist, an den nahe der zweiten Stirnplatte 21 eine Zuleitung 14 anschließt, über welche diesem heiße Gase zuführbar sind. Im Bereich der ersten Stirnplatte 20 befindet sich ein Ableitrohr 15 das zum Abzugsrohr 40 führt. Die Stirnplatten 20 und 21 sind aus hochisolierendem, keramischen Fasermaterial gefertigt, wobei sie an ihrer dem Innenraum 11 der Trommel 10 zugewandten Wandung mit einer Verkleidung aus zunderfreiem Stahl ausgebildet sind. Ebenso ist das Gehäuse 12 aus hochisolierendem, keramischen Fasermaterial gefertigt, wobei es an seiner Innenseite mit Stahlblech und an seiner Außenseite mit Aluminiumblech verkleidet ist. Die Trommel 10 ist beispielsweise aus Weichguß mit Si, Cr und Ni, das vorzugsweise eine Wärmeleitfähigkeit von 50 kCal/mh°C und einer Oberflächenhärte von 400 HB (Brinell) aufweist, gefertigt.

An der Außenseite der Trommel 10 befinden sich in axialer Richtung erstreckende Rippen 36. An der Innenseite des Gehäuses 12 befinden sich in der Zeichnung nicht dargestellte Rippen die längs dieser Wandung angenähert ringförmig verlaufen. Weiters ist die Innenwandung des die Trommel 10 durchsetzenden Rohres 31 gleichfalls mit sich längserstreckenden Rippen 32 ausgebildet. Zwischen der ersten Stirnfläche 20 bzw. dem Gehäuse 12 und dem Sockel für den Zahnkranz 34 sind beispielsweise durch Graphitringe gebildete Dichtungen vorgesehen. In gleicher Weise sind zwischen dem Gehäuse 12 bzw. der zweiten Stirnplatte 21 und dem Sockel für den Laufkranz 35 Dichtungen in Form von Graphitringen angeordnet. Weiters sind an der Innenwandung der Trommel 10 z.B. schräg bzw. spiralig verlaufende Leitvorrichtungen angeordnet, deren Funktion nachstehend näher erläutert ist.

Die Wirkungsweise der vorstehend beschriebenen Einrichtung ist wie folgt : Rohstoffgemenge für die Glaserzeugung wird über einen Fülltrichter 24 dem Rohr 22 zugeführt und über die Schnecke 23 in den Inneraum 11 der Trommel 10 eingebracht. Die Trommel 10 wird mittels des mit dem Zahnkranz 34 kämmenden Zahrades 3 in Rotation versetzt. Weiters werden durch den seitlichen Rohranschluß 30 in das die Trommel 10 durchsetzende Rohr 31 bei der Glasschmelzung anfallende heiße Gase eingeführt, die dieses Rohr 31 durchströmen und zum Abzugsrohr 40 gelangen. Durch diese heißen Gase wird das Rohr 31 erhitzt, wodurch es in den Inneraum 11 der Trommel 10 Wärme abstrahlt. Die Wärmeaufnahmefähigkeit des Rohres 31 wird durch die an seiner inneren Wandung vorgesehenen Rippen 32 vergrößert. In ähnlicher Weise werden über die Zuleitung 14 auch in den Ringkanal 13 von der Glasschmelzwanne kommende heiße Gase eingeführt, die längs der Außenwandung der Trommel 10 strömen, wobei sie durch das Rohr 15 aus dem Ringkanal 13 abgeführt sowie gleichfalls dem Abzugsrohr 40 zugeführt werden. Durch diese heißen Gase wird auch die Wandung der trommel 10 erhitzt, wodurch diese nach innen Wärme abstrahlt. Da die Außenwandung der trommel 10 einerseits und die Innenwandung des Gehäuse 12 andererseits mit einander angenähert kreuzenden Profilierungen ausgebildet sind treten in den im Ringkanal 12 strömenden Gasen Wirbelbildungen auf, wodurch eine Optimierung des Wärmeüberganges auf die trommel 10 bewirkt wird.

Demnach wird das im Innenraum 11 der Trommel befindliche Rohstoffgemenge sowohl von seiner Oberseite her als auch von seiner Unterseite her mit Wärme beaufschlagt. Infolge der Rotation der Trommel 10 wird das Gemenge umgewälzt. Dabei gleitet es längs der Wandung der Trommel 10, wobei es aufgrund der innerhalb der Trommel 10 vorgesehenen Leiteinrichtungen in axialer Richtung von der ersten Stirnplatte 20 zur zweiten Stirnplatte 21 hin gefördert wird. Durch die Bewegung des Rohstoffgemenges kann in diesem eingeschlossene Luft aus diesem austreten. Durch die Erwärmung des Rohstoffgemenges wird weiters in diesem befindliche Feuchtigkeit ausgetrieben. Weiters treten zunehmend Feststoffreaktionen auf, wodurch eine teilweise Silikatbildung erfolgt. Nachdem das Rohstoffgemenge die Trommel 10 durchsetzt hat, gelangt es durch den Spaltraum 25 in die Rutsche 16, von der es in die in der Glaswanne 5 befindliche Glasschmelze gelangt.

Die aus dem in der Trommel 10 behandelten Gemenge austretende Luft bzw. Feuchtigkeit wird über das Rohr 26 und über die Ventile 27 bzw. 28 dem Abzugsrohr 40 zugeführt. In einer weiteren Leitung kann ein Filtersack 29 angeordnet sein.

Da die Erhitzung des Rohstoffgemenges erfolgt, ohne daß über dieses heiße Gase hinwegstreichen und insbesondere da die Trommel 10 gegenüber der freien Atmosphäre weitestgehend abgeschlossen ist, wird vermieden, daß aus dem Rohstoffgemenge staubförmige Anteile, die zur Beschädigung der nachgeschalteten Anlageteile führen können, abgeführt werden. Demnach wird die angestrebte thermische Behandlung des Rohstoffgemenges erzielt, ohne daß hierfür eine zusätzliche Wärmequelle erforderlich ist.

**Ansprüche**

1. Vorrichtung zur thermischen Behandlung von Rohstoffgemenge für die Glaserzeugung vor dessen Einbringung in die Glasschmelze, bei welcher das Rohstoffgemenge in eine rotierbare Trommel (10) eingebracht und unter Rotation derselben durch diese Trommel (10) hindurchgefördert sowie in dieser erhitzt wird, worauf es an die Glasschmelze abgegeben wird, wobei die rotierbare Trommel (10), welche aus gut wärmeleitendem Material gefertigt ist, in axialer Richtung von einem Rohr (31) durchsetzt ist und an ihrer Außenseite von einem ringförmigen Kanal (13) umgeben ist, sowie sowohl das Rohr (31) als auch der ringförmige Kanal (13) von aus der Schmelzwanne stammenden heißen Gasen durchströmt sind, welche den ringförmigen Kanal (13) im Gegenstrom zu dem in der Trommel (10) geförderten Glasgemenge durchströmen, dadurch gekennzeichnet, daß sich die rotierbare Trommel (10), welche gegenüber der freien Atmosphäre weitgehend abgeschlossen ist, innerhalb eines gestellfesten Isoliergehäuses (12) befindet und auch das die Trommel (10) durchsetzende Rohr (31) gestellfest ist, daß weiters die rotierbare Trommel (10) an ihrer Außenfläche mit der Vergrößerung der Wärmeaufnahmefläche dienenden Pofilierungen, insbesondere mit Rippen (36), ausgebildet ist, und daß auch das Rohr (31) mit im Gegenstrom zu dem in der Trommel (10) geförderten Glasgemenge durchströmt ist, wobei die Anordnung so gewählt ist, daß im Rohstoffgemenge eine teilweise Silikatbildung erfolgt.

2. Vorrichtung nach Anspruch 1, dadurch gekennzeichnet, daß auch die Innenfläche des die rotierbare Trommel (10) durchsetzenden Rohres (31) mit der Vergrößerung der Wärmeaufnahmefläche dienenden Profilierungen, insbesondere mit Rippen (32), ausgebildet ist.

3. Vorrichtung nach einem der Ansprüche 1 und 2, dadurch gekennzeichnet, daß an der Innenwand des die Trommel (10) umgebenden Gehäuses (12) Profilierungen vorgesehen sind, durch welche in dem zwischen der Trommel (10) und dem Gehäuse (12) gebildeten ringförmigen Kanal (13) Wirbelströmungen bewirkt werden.

4. Vorrichtung nach einem der Ansprüche 1 bis 3, dadurch gekennzeichnet, daß die rotierbare Trommel (10) mit gestellfesten, gegenüber derselben abgedichteten Stirnwänden (20, 21) ausgebildet ist.

5. Vorrichtung nach Anspruch 4, dadurch gekennzeichnet, daß eine erste Stirnwand (20) von einer Fördereinrichtung (23) zur Beschickung des Innenraumes (11) der rotierbaren Trommel (10) mit Rohstoffgemenge durchsetzt ist und daß im Bereich der zweiten Stirnwand (21) eine zur Glasschmelzwanne (5) abgehende Rutsche (16) vorgesehen ist.

**Claims**

1. Apparatus for the heat treatment of a raw material batch for glass production prior to its introduction into the glass melt, in which the raw material batch is introduced into a rotary drum (10) and is conveyed through and heated in said drum accompanied by the rotation thereof, after which it is supplied to the glass melt, the rotary drum (10) made from a good heat conducting material being axially traversed by a pipe (31) and is surrounded on its outside by an annular duct (13) and hot gases from the melting chamber flow through both pipe (31) and the annular duct (13), said gases flowing through the annular duct (13) in the opposite direction to the glass batch conveyed in the drum (10), characterized in that the rotary drum (10), which is substantially sealed with respect to the free atmosphere, is located within a fixed insulating casing (12) and the pipe (31) passing through the drum (10) is also fixed, that on its outer face the rotary drum (10) is provided with profilings, particularly ribs (36) which increase the heat absorption surface and that the flow through the pipe (31) is also in the opposite direction to the glass batch conveyed in the drum (10), the arrangement being such that a partial silicate formation occurs in the raw material batch.

2. Apparatus according to claim 1, characterized in that the inner face of the type (31) traversing the rotary drum (10) is also constructed with profilings, particularly ribs (32) increasing the size of the heat absorption surface.

3. Apparatus according to one of the claims 1 and 2, characterized in that profilings are provided on the inner wall of the casing (12) surrounding the drum (10) and lead to turbulent flows in the annular duct (13) formed between the drum (10) and the casing (12).

4. Apparatus according to one of the claims 1 to 3, characterized in that the rotary drum (10) is constructed with fixed end walls (20, 21) sealed with respect to the same.

5. Apparatus according to claim 4, characterized in that a first end wall (20) is traversed by a first conveying means (23) for feeding the raw material batch into the inner area (11) of the rotary drum (10) and that in the vicinity of the second end wall (21) is provided a chute (16) passing out towards the glass melting chamber (5).

canal annulaire (13), tant le tuyau (31) que le canal annulaire (13) étant traversés par des gaz chauds provenant de la cuve de la masse en fusion lesquels circulent dans le canal annulaire (13) en contre-courant par rapport au mélange de matières premières transporté dans le tambour (10), caractérisé en ce que le tambour rotatif (10), lequel est dans une grande mesure fermé par rapport à l'atmosphère extérieure, se trouve à l'intérieur d'un logement isolant (12) fixe dans le bâti et le tuyau (31) traversant le tambour (10) est également fixe dans le bâti, en outre le tambour rotatif (10) est agencé à sa surface extérieure avec des profilages, en particulier des ailettes (36), servant à augmenter la surface d'absorption de la chaleur et la circulation dans le tuyau (31) aussi étant en contrecourant par rapport au mélange de matières premières transporté dans le tambour (10), la disposition étant choisie de manière telle qu'il y ait formation partielle de silicate dans le mélange de matières premières.

2. Appareil selon la revendication 1 caractérisé en ce que la surface intérieure aussi du tuyau (31) traversant le tambour rotatif (10) est agencée avec des profilages, en particulier des ailettes (32), servant à l'agrandissement de la surface d'absorption de la chaleur.

3. Appareil selon l'une des revendications 1 et 2 caractérisé en ce qu'à la paroi intérieure du logement (12) entourant le tambour (10), on a prévu des profilages qui provoquent des écoulements tourbillonaires dans le canal annulaire (13) formé entre le tambour (10) et le logement (12).

4. Appareil selon l'une des revendications 1 à 3 caractérisé en ce que le tambour rotatif (10) est réalisé avec des parois frontales (20, 21) fixes dans le bâti et rendues étanches par rapport à ce tambour.

5. Appareil selon la revendication 4 caractérisé en ce que la première paroi frontale (20) est traversée par un dispositif de transport (23) pour l'alimentation de l'intérieur (11) du tambour rotatif (10) en mélange de matières premières et en ce qu'on prévoit une goulotte descendant vers la cuve du bain de verre (5) dans la région de la deuxième paroi frontale (21).

## Revendications

1. Appareil de traitement thermique de matières premières pour la fabrication de verre avant leur introduction dans le bain de verre dans lequel on introduit le mélange de matières premières dans un tambour rotatif (10), le mélange étant déplacé à travers le tambour et chauffé pendant que ce tambour tourne et étant ensuite délivré au bain de verre, le tambour rotatif (10), fabriqué en un matériau bon conducteur de la chaleur, étant traversé en direction axiale par un tuyau (31) et étant entouré à sa face extérieure par un

FIG.1

# FIG. 2